# EUROPEAN PATENT SPECIFICATION

(11) **EP 4 431 309 B1**
(45) Date of publication and mention of the grant of the patent: **29.04.2026**
(21) Application number: 24163565.5
(22) Date of filing: 14.03.2024
(51) Int. Cl.: B60C 9/14, B60C 15/06, B60C 9/18, B60C 13/04

(54) **TIRE WITH SIDEWALL GUM LAYER**
REIFEN MIT SEITENWANDGUMMISCHICHT
PNEU AVEC COUCHE DE GOMME DE FLANC

(30) Priority: 15.03.2023 US 202363490373 P; 30.01.2024 US 202418426476; 30.01.2024 US 202418426577
(43) Date of publication of application: 18.09.2024
(73) Proprietor: The Goodyear Tire & Rubber Company, Akron, OH 44316 (US)
(72) Inventor: REICHLING, Gilles, L-9189 Vichten (LU); ZOTZ, Bernd, D-63450 Hanau (DE); MULLER, Philippe Joseph Auguste, B-6971 Champlon (BE); FROGER, Nicolas Claude Jean-Claude, F-54860 Haucourt-Moulaine (FR); FOSAM, Richard, L-7462 Moesdorf (LU); BARAN, Wojciech Franciszek, L-9045 Ettelbruck (LU); WIETOR, Patrick, D-54439 Palzem (DE)
(74) Representative: Kutsch, Bernd

(56) References cited:
- EP-A1- 3 878 667
- DE-A1- 102014 207 193
- JP-A- 2011 079 357
- US-A- 5 992 487
- US-A1- 2019 193 485

## Description

### FIELD OF THE INVENTION

The present invention relates generally to tires and, more particularly, to pneumatic tires with improved durability.

### BACKGROUND OF THE INVENTION

A tire typically includes a pair of axially separated inextensible beads having at least one carcass ply extending between the two beads. The carcass ply includes axially opposite end portions each of which can be turned up around a respective bead and secured thereto. Tread rubber and sidewall rubber are located axially from and radially outward of, respectively, the carcass ply.

Additional features may be included in the tires to improve the durability of the tire (the ability for the tire to withstand wear and damage). Examples of these features include a rubber wedge placed between the carcass plies and tread rubber where the sidewall meets the carcass plies or an extended sidewall that extends between the carcass plies and the tread rubber. While both of these features improve the durability of the tire, both also add a significant volume of rubber to the tire, which increases the weight of the tire.

During operation, the rubber of the tire sidewall deforms, which creates heat and accelerates wear of the sidewall. To restrict deformations, the thickness of rubber of the tire side portion can be increased. However, the associated increased weight can increase the rolling resistance of the tire, which reduces tire performance and fuel economy as well as increases wear in other locations of the tire. Therefore, solutions to reduce the heat generation or accumulation at the sidewall with minimal increase in overall tire weight is desired.

EP 3 878 667 A1 describes a tire in accordance with the preamble of claim 1.

Further tires having sidewall gum layers extending from the tire apex radially upwards are known from US 5,992,487 A, DE 10 2014 207 193 A1 and JP 2011 079357 A

### SUMMARY OF THE INVENTION

The invention relates to a tire in accordance with claim 1.

Dependent claims refer to preferred embodiments of the invention.

A first preferred aspect of the present invention is a tire comprising a bead portion comprising a bead core embedded therein; a carcass anchored around the bead core, the carcass comprising a carcass plies portion and a turnup portion; an apex between the carcass plies portion and the turnup portion; a belt package arranged between the carcass and a tread; a sidewall gum layer that extends from a first end located at the apex along the carcass plies to a second end; a wraparound gum layer that wraps around an end of a first inner zigzag belt structure of the belt package; and a belt gum layer that extends from a first end located between the belt package and the carcass plies along the carcass plies to a second end, wherein a distance between the second end of the belt gum layer and the second end of the sidewall gum layer is 15 mm or greater.

A second preferred aspect of the present invention is a tire comprising a pair of bead portions each containing a bead core embedded therein; a carcass comprising carcass plies that extend between the bead cores with turnup portions of the carcass plies anchored around each bead core; an apex above the bead core and between the carcass plies and the turnup portions; a sidewall portion that extends substantially outward from each of the bead portions in the radial direction; a tread portion that extends between radially outer ends of the sidewall portions; a belt package arranged between the carcass and the tread portion; a sidewall gum layer that extends from a first end located at the apex along the carcass plies to a second end; a wraparound gum layer that wraps around an end of a first inner zigzag belt structure of the belt package; and a belt gum layer that extends from a first end located between the belt package and the carcass plies along the carcass plies to a second end, wherein a distance between the second end of the belt gum layer and the second end of the sidewall gum layer is 15 mm or greater.

### DEFINITIONS

The following definitions are applicable to the present invention.

"Apex" means an elastomeric filler located radially above the bead core and between the one or more plies and turned up ends of the one or more plies.

"Axial" and "axially" mean lines or directions that are parallel to the axis of rotation of the tire.

"Bead core" means an annular tensile member reinforcing the bead region of a tire, commonly constructed of steel wire, cords or cables.

"Bead Region" means that part of the tire wrapped by a carcass and including a bead core. The bead region may be shaped, with or without other reinforcement elements such as flippers, chippers, apexes, toe guards, and chafers, to fit the design rim.

"Belt structure" means one or at least two annular layers or plies of parallel cords, woven or unwoven, underlying the tread, unanchored to the bead, and preferably having cords inclined with respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Cord" means one of the reinforcement strands of which the reinforcement structures of the tire comprise.

"Cord angle" means the acute angle, left or right in a plan view of the tire, formed by a cord with respect to the equatorial plane. The "cord angle" is measured in a cured but uninflated tire.

"Elastomer" means a resilient material capable of recovering size and shape after deformation.

"Equatorial plane (EP)" or "Equatorial Centerplane (CP) means the plane perpendicular to the axis of rotation of the tire and passing through the center of the tire tread.

"Inner" means toward the inside of the tire.

"Innerliner" means the layer or layers of elastomer or other material that form the inside surface of a tubeless tire and that contain the inflating fluid within the tire.

"Lateral" and "laterally" are used to indicate axial directions across the tread of the tire.

"Lateral edges" of the tread means a line tangent to the axially outermost tread contact patch or footprint as measured under normal load and tire inflation, the lines being parallel to the equatorial centerplane.

"Outer" means toward the outside of the tire.

"Ply" means a cord-reinforced layer of rubber; rubber-coated, radially deployed or otherwise parallel cords.

"Pneumatic Tire" means a laminated mechanical device of generally toroidal shape (usually an open-torus) having beads and a tread and made of rubber, chemicals, fabric, and steel or other materials. When mounted on the wheel of a motor vehicle, the tire through its tread provides traction and contains the fluid that sustains the vehicle load.

"Radial" and "radially" are used to mean directions radially toward or away from the axis of rotation of the tire.

"Sidewall" means that portion of a tire between the tread and the bead.

"Sidewall-over-tread" refers to a tire design and method of fabrication in which the radially outermost portions of each sidewall of a tire overlie the lateral end portions of the tread.

"Tread" means a molded rubber component which includes that portion of the tire that comes into contact with the road when the tire is normally inflated and under normal load. The tread has a depth conventionally measured from the tread outer surface to the bottom of the deepest groove of the tire.

"Zigzag belt structure" means a belt structure formed of at least two layers of cords interwoven together wherein a ribbon of parallel cords preferably having 1 to 20 cords in each ribbon are laid up in an alternating pattern extending at an angle preferably between 1 degrees and 45 degrees between lateral edges of the belt, and more preferably between 3 degrees and 11 degrees, and most preferably between 5 degrees and 11 degrees.

### BRIEF DESCRIPTION OF THE DRAWINGS

The invention will be described by way of example and with reference to the accompanying drawings in which:
FIG. 1 illustrates a cross-sectional view of one half of an example tire of the present invention.
FIG. 2 is an enlarged view of the area of interest identified in FIG. 1 illustrating a first end of a sidewall gum layer in contact with a wedge that supports a lateral end portion of a belt.
FIG. 3 is a view similar to FIG. 2 illustrating the first end of the sidewall gum layer in contact with a wraparound gum layer disposed around the lateral end portion of the belt.
FIG. 4 is a view similar to FIG. 2 but illustrating a comparative example with the first end of a sidewall gum layer being in direct contact with the lateral end portion of the belt.
FIG. 5 is an enlarged view of the area of interest identified in FIG. 1 illustrating a sidewall gum layer extending to a bead filler apex within a bead region of the tire.
FIG. 6 is a view similar to FIG. 5 illustrating the sidewall gum layer extending to an opposite lateral side of the bead filler apex within a bead region.
FIG. 7 is a view similar to FIG. 5 illustrating the sidewall gum layer extending to a bead core within a bead region that does not include a bead filler apex therein.
FIG. 8 is a view similar to FIG. 5 illustrating the sidewall gum layer extending to point radially outward of bead filler apex within a bead region.

### DESCRIPTION OF PREFERRED EMBODIMENTS OF THE INVENTION

The present invention relates generally to tires and, more particularly, to tires with improved durability. The tires of the present invention may be used in multiple applications, such as: race tires, passenger tires (including heavy load capacity passenger tires), aircraft tires, agricultural tires, earthmover tires, off-the-road tires, commercial (or truck) tires.

The tires of the present invention include thin layers (e.g., 0.2 mm to 2 mm thick) of extra rubber (referred to herein as gum layers) that are strategically placed to take up and dissipate thermal energy in the tire's sidewall portion during rolling. Advantageously, the gum layers are thin and only in a portion of the tire construction, and, therefore, contribute minimal weight to the overall tire. As gum layers of extra rubber, they do not include cords or fabric.

The rubber composition of the gum layers preferably have mechanical properties (e.g., a Shore A hardness between 80 and 95) that allow for other durability-improving features (e.g., specific sidewall configurations like sidewall-over-tread and wedges) to be eliminated, which may reduce the complexity of the tire and its manufacturing as well as reduce the weight of the tire while still maintaining a desired level of durability.

The tire includes a pair of bead portions each containing a bead core embedded therein. Each bead core preferably includes a plurality of metallic filaments. The example tire may be characterized by carcass plies that extend between the bead cores and turnup portions anchored around each bead core. Above the bead core between the carcass plies and turnup portions is an apex that comprises an elastomeric filler. The bead portions may further include a chafer, a toeguard, a chipper, and/or a flipper.

The carcass plies are part of a carcass toroidally extending from one of the bead portion to the other bead portion. The carcass can comprise one or at least two carcass plies (e.g., two to ten carcass plies). Among these one or more carcass plies, inner plies are preferably wound around the bead core from inside of the tire toward outside thereof to form turnup portions. The carcass may include outer plies that extend downward to the bead core along the outside of the turnup portion of the inner carcass plies. Each of the carcass plies (inner and outer when included) can contain many nylon cords (e.g., nylon-6,6 cords) extending substantially perpendicular to an equatorial plane EP of the tire (i.e., extending in the radial direction R of the tire). A sidewall portion extends substantially outward from each of the bead portions in the radial direction of the tire. A tread portion extends between radially outer ends of the sidewall portions. A belt package is arranged between the carcass and the tread portion and comprise one or more belt plies. Preferably, the one or more radially innermost belts, which are located near the carcass, are low angle belts, with a belt angle of 10 degrees or less, more preferably with a belt angle of 5 degrees or less. The one or more low angle belts may be formed of belt ply with parallel cords at a desired angle (i.e., belts with cut ends) or may be formed by helically winding a strip of one or more cords about the tire building drum to form a continuous belt with no cut ends. Preferably, the one or more low angle belts increase in width from the radially innermost belt to the radially outermost belt.

Preferably, the one or more radially innermost belts, which are located radially outward of the one or more low angle belts, are zigzag belts structures. Each of the radially outer zigzag belts are formed by winding a rubberized strip of one or more parallel reinforcement cords generally in the circumferential direction while being inclined to extend between side ends or lateral edges of the layer forming a zigzag path and conducting such a winding many times while the strip is shifted by approximately a width of the strip in the circumferential direction so as not to form a gap between the adjoining strips. As a result, the cords of each strip extend substantially zigzag in the circumferential direction while changing the bending direction at a turnaround point at both ends and are substantially uniformly embedded in the first inner zigzag belt structure over a full region of the first inner zigzag belt. The cords of the zigzag belt structures cross with each other at a cord angle of 5 degrees to 40 degrees with respect to the equatorial plane EP of the tire when the strip is reciprocated at least once between both side ends of the ply within every 360 degrees of the circumference as mentioned above.

The radially outermost zigzag belt structure is preferably the narrowest belt, wherein the belt edges extend over the sides of the other belt edges of zigzag belt structures. The main belt layers are preferably formed from a hybrid or merged cord of nylon and aramid. More preferably, the main belt cord construction is 3000 d/2 aramid and 1680 d/1 nylon.

The tire further comprises an optional barrier layer radially inward of the carcass and an innerliner radially inward of the barrier layer and the carcass. The barrier layer is at a shoulder portion of the tire where, because the tire would be symmetric, there is a barrier layer at the inside shoulder portion and the outside shoulder portion. Alternative barrier layer configurations are contemplated including a single barrier layer that extends from the inside shoulder portion and the outside shoulder portion of the tire.

The tire further comprises three gum layers. A sidewall gum layer extends from a first end point located at the apex along the carcass plies to a second end point. The second end point is preferably located between the carcass plies and the sidewall portion.

A wraparound gum layer wraps around (or forms a U-shape around) an end of the first or radially inner zigzag belt structure. The wraparound gum layer is preferably not in contact with an intermediate zigzag belt structure. However, the wraparound gum layer may extend to between the first or radially inner zigzag belt structure and the intermediate zigzag belt structure.

A belt gum layer extends from a first end point located between belt package and the carcass plies along the carcass plies to a second end. The second end is preferably located between the carcass plies and the tread portion. Alternatively, the structure of the tread portion and the sidewall portion may cause the sidewall portion to extend over the belt gum layer rather than the tread portion. Therefore, the second end may alternatively be located between the carcass plies and the sidewall portion.

The belt gum layer is preferably in contact with the wraparound gum layer. Alternatively, the most radially outward portion of the sidewall portion may be located between the belt gum layer and the wraparound gum layer.

A distance or spacing between the second end point of the belt gum layer and the second end point of the sidewall gum layer 80 is preferably 15 mm or greater (e.g., 15 mm to 45 mm, or 15 mm to 30 mm, or 25 mm to 40 mm, or 30 mm to 45 mm).

The gum layers used in the construction of the tires described herein are formed of a rubber. Preferably, the rubber has a Shore A hardness between 80 and 95, tested according to ASTM S2240-15(2021).

Examples of rubbers suitable for use in the gum layers described herein include neoprene (polychloroprene), polybutadiene (including cis-1,4-polybutadiene), polyisoprene (including cis-1,4-polyisoprene) (natural or synthetic), butyl rubber, halobutyl rubber (including chlorobutyl rubber or bromobutyl rubber), styrene/isoprene/butadiene rubber, copolymers of 1,3-butadiene or isoprene with monomers such as styrene, acrylonitrile and methyl methacrylate, ethylene/propylene terpolymers (also known as ethylene/propylene/diene monomer (EPDM) terpolymers (e.g., ethylene/propylene/dicyclopentadiene terpolymers)), alkoxy-silyl end functionalized solution polymerized polymers, styrene-butadiene rubber, polybutadiene rubber, isoprene butadiene rubber, styrene isoprene butadiene rubber, the like, and any combination thereof. Each gum layer may have the same or a different composition.

The rubber of the gum layers may also include conventional rubber compounding ingredients including processing oil, accelerators, conventional sulfur curing agents, pigments, carbon black, zinc oxide, stearic acid, tackifying resin, plasticizer, the like, and any combination thereof.

The gum layers preferably have a thickness of 0.2 mm to 2 mm (or 0.2 mm to 1 mm, or 0.5 mm to 1.5 mm, or 1 mm to 2 mm). Each gum layer may have the same or a different thickness from each other.

The rubber of the barrier layer, innerliner, carcasses (including the carcass plies), belt packages, and tread portions described herein may comprise a rubber. Specific examples of suitable rubbers include neoprene (polychloroprene), polybutadiene (including cis-1,4-polybutadiene), polyisoprene (including cis-1,4-polyisoprene) (natural or synthetic), butyl rubber, halobutyl rubber (including chlorobutyl rubber or bromobutyl rubber), styrene/isoprene/butadiene rubber, copolymers of 1,3-butadiene or isoprene with monomers such as styrene, acrylonitrile and methyl methacrylate, ethylene/propylene terpolymers (also known as ethylene/propylene/diene monomer (EPDM) terpolymers (e.g., ethylene/propylene/dicyclopentadiene terpolymers)), alkoxy-silyl end functionalized solution polymerized polymers, styrene-butadiene rubber, polybutadiene rubber, isoprene butadiene rubber, styrene isoprene butadiene rubber, the like, and any combination thereof. The foregoing rubbers may also include conventional rubber compounding ingredients including processing oil, accelerators, conventional sulfur curing agents, pigments, carbon black, zinc oxide, stearic acid, tackifying resin, plasticizer, the like, and any combination thereof.

The production of the tires of the present invention includes assembling the tire components followed by curing according to production methods conventionally known in the art, which may be dependent on the type of tire. For example, passenger tires may be cured at a temperature ranging from 130°C to 170°C, and truck tires may be cured at a temperature ranging from 150°C to 180°C.

Gum layers typically come in a roll (e.g., 1 cm to 20 cm wide). When assembling the components of the tires of the present invention the gum layers may be applied in a side-by-side configuration with the length of the gum layer extending along the cross-section of the tire.

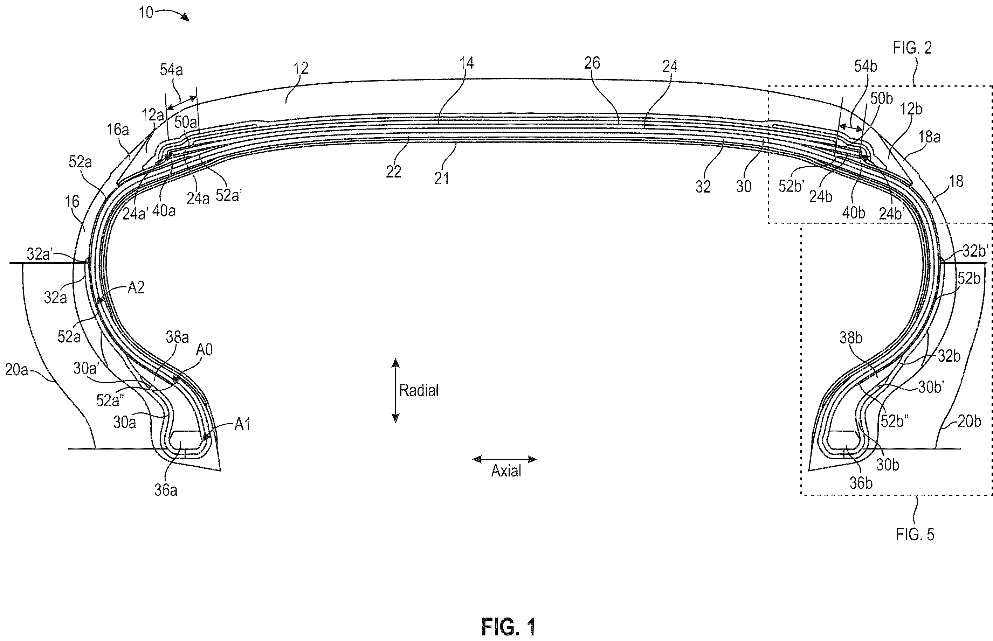

FIG. 1 illustrates a cross-sectional view of a pneumatic tire 10 according to at least some embodiments of the present invention. The tire 10 has a sidewall-over-tread (SOT) design. However, the teachings of the present invention (especially the placement, compositions, and dimensions of the wraparound gum layers and sidewall gum layers) may be applied to other tire designs include tread-over-sidewall designs.

The tire 10 includes a tread or tread cap 12, a belt structure 14 comprising belts 24, 26, a pair of sidewall portions 16, 18, a pair of bead regions 20a, 20b, a carcass structure 22, a pair of wedges 40a, 40b, and an innerliner 21.

While the illustrated belt structure 14 includes two belts 24, 26, any number of belts (e.g., 1 to 10) may be included in a tire 10 of the present invention. In the illustrated tire 10, the first belt 24 is radially inward of the second belt 26. In tires 10 of the present invention, the first belt 24 (the radially innermost belt) of the belt structure 14 is preferably the widest belt of the belt structure 14. Preferably, the first belt 24 has a belt width substantially equal to the tread arc width. The breaker angle of first belt 24 is preferably between 12 degrees and 45 degrees, preferably with a left orientation, more preferably in the range of 19 degrees to 30 degrees. The belt angles are measured with respect to the circumferential direction.

The second belt 26 is located radially outward of the first belt 24. The second belt 26 preferably has a width in the range of 30% to 50% of the tread arc width. The second belt 26 preferably has a breaker angle between 12 degrees and 45 degrees, preferably with a right orientation, more preferably in the range of 19 degrees to 30 degrees. The second belt 26 is preferably made of the same wire as the first belt 24 and has the same construction with the same but opposite angular orientation as first belt 24.

The first and second belts 24, 26 are preferably made of steel, i.e. reinforced with steel. The % elongation at 10% of the breaking load of the first and second belts 24, 26 preferably ranges from 0.18 to 0.26. More preferably, the first and second belts 24, 26 are extensible, so that the % elongation at 10% of breaking load is greater than 0.2. The % elongation is measured on a cord extracted from a vulcanized tire.

Generally, for SOT and other designs, the sidewalls 16, 18 extend substantially outward from each of the bead regions 20a, 20b in the radial direction of the tire 10. The illustrated tire 10 is a sidewall-over-tire (SOT) design where the radially outermost portions 16a, 18a of each sidewall 16, 18 of a tire 10 overlie the lateral end portions 12a, 12b of the tread cap 12, respectively.

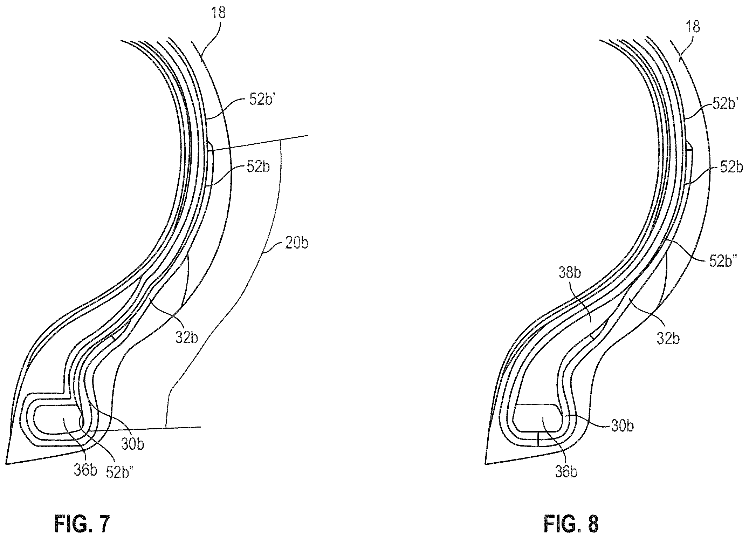

The pair of bead regions 20a, 20b include a pair of annular bead cores 36a, 36b. In some embodiments, as illustrated in FIG. 1, the bead regions 20a,20b each further include a respective bead filler apex 38a, 38b. In other embodiments (see FIG. 7), the bead regions 20a,20b may include bead cores 36a, 36b without including bead filler apexes 38a, 38b.

The carcass 22 is radially outward of the innerliner 21. The carcass 22 preferably comprises a first ply 30 and second ply 32 radially inward of the first ply 30. While the illustrated carcass 22 includes two plies 30, 32, any number of plies (e.g., 1 to 10) may be included in a tire 10 of the present invention. During the manufacturing sequence, the plies can be installed such that the portions of some or all of the plies extend into the bead region 20a, 20b are turned up around the respective bead cores 36a, 36b to create turned up ends. In the illustrated example, the first and second plies 30, 32 both include turned up ends 30a, 32a and 30b, 32b around each of the respective bead cores 36a, 36b. The turned up ends 30a, 32a extend from the bead cores 36a, 36b to outer end points 30a', 32a', 30b', 32b' of each ply 30, 32. The carcass 22 wraps around the bead regions 20a, 20b such that at least one of the plies 30, 32 extend along both inner and outer axial sides of the bead region 20a, 20b. For example, the turned up ends 32a, 32b of the second ply 32 extend along outer axial sides of the bead regions 20a, 20b and the first ply 30 extends along inner axial sides of the bead regions 20a, 20b.

On either side of the tire 10, a wedge 40a, 40b is located, at least partially, between a respective lateral end portion 24a, 24b of the first belt 24 (the radially innermost belt) and the first ply 30 (the radially outermost ply). That is, a first wedge 40a is, at least partially, between a first lateral end portion 24a of the first belt 24 (the radially innermost belt) and the first ply 30 (the radially outermost ply), and a second wedge 40b is, at least partially, between a second lateral end portion 24b of the first belt 24 and the first ply 30. Wedges 40a, 40b support the lateral end portions 24a, 24b and assist in maintaining a predetermined curvature of the first belt 24. The wedges 40a, 40b are preferably constructed of a rubber or elastomer, or any of the materials described below for the construction of the "gum layers" described herein. As illustrated, each wedge 40a, 40b extends axially outward past a respective lateral edge 24a', 24b' of the first belt 24 to be between the respective lateral end portion 12a, 12b of the tread cap 12 and the first ply 30.

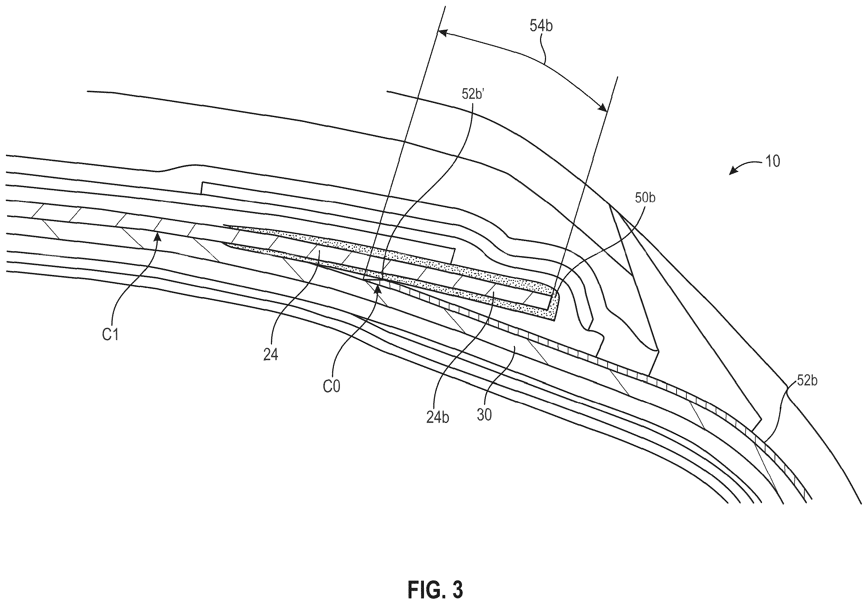

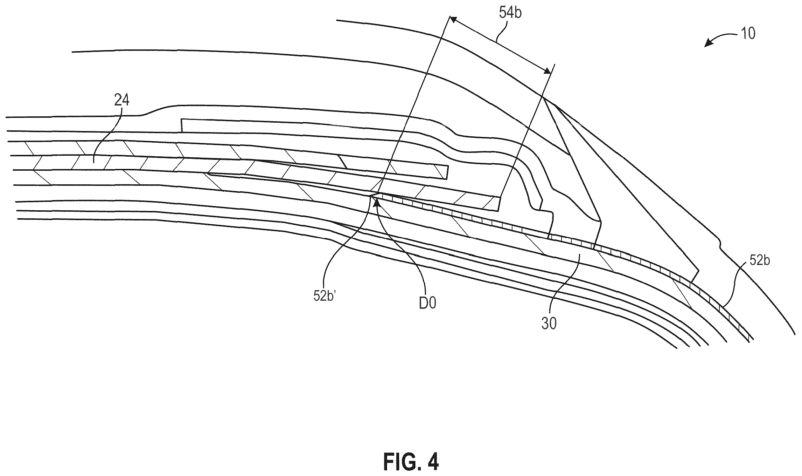

As illustrated, each wedge 40a, 40b extends axially outward past a respective lateral edge 24a', 24b' of the first belt 24 to be between the respective lateral end portion 12a, 12b of the tread cap 12 and the first ply 30. In alternative embodiments to FIG. 1, a tire 10 may not include the pair of wedges 40a, 40b (see, e.g., FIGS. 3 and 4). All other disclosure related to FIG. 1 would be applicable to this alternative embodiment.

The tire 10 preferably further comprises a pair of wraparound gum layers 50a, 50b and a pair of sidewall gum layers 52a, 52b. Each of the wraparound gum layers 50a, 50b wraps around a respective lateral end portion 24a, 24b of the first belt 24 (the radially innermost belt). Each wraparound gum layer 50a, 50b extends along an outer surface of the first belt 24 (the radially innermost belt), wraps around a respective end of the first belt 24, and extends along an inner surface of the first belt 24. That is, a first wraparound gum layer 50a wraps around a first lateral end portion 24a of the first belt 24 (the radially innermost belt), a second wraparound gum layer 50b wraps around a second lateral end portion 24b of the first belt 24 (the radially innermost belt).

Each wraparound gum layer 50a, 50b preferably extends along the inner and outer surfaces of the first belt 24 (the radially innermost belt), cumulatively, for 10 mm to 30 mm (or 15 mm to 25 mm). The length that each wraparound gum layer 50a, 50b extends along the inner and outer surfaces of the first belt 24 may be different or the same.

In alternate embodiments to FIG. 1, the tire 10 may further comprise one or more additional pairs of wraparound gum layers that each wrap around a lateral end portion of other belts in the belt structure 14. For example, the tire 10 may further comprise a second pair of wraparound gum layers where each wraparound gum layer wraps around a lateral end portion of second belt 26. If a third belt is included in the belt structure, a pair of wraparound gum layers is associated with the radially innermost belt, and, if additional pair(s) of wraparound gum layers are include in the tire, a pair of wraparound gum layers may be associated with one or both of the other two belts. The disclosure relating to the dimensions, composition, and location for the wraparound gum layer 50a, 50b of FIG. 1 apply to any of the one or more additional pairs of wraparound gum layers relative to the belt to which said additional pair(s) of wraparound gum layers is associated. In other alternative embodiments to FIG. 1, a tire 10 may not include any wraparound gum layers 50a, 50b (see, e.g., FIG. 4). All other disclosure related to FIG. 1 would be applicable to this alternative embodiment.

Each of the sidewall gum layers 52a, 52b extends along an outer surface of the first ply 30 (the radially outermost ply) of the carcass 22 from a first end 52a', 52b' to a second end 52a", 52b". Inner surfaces of the sidewall gum layers 52a, 52b are in contact with the first ply 30 preferably along an entire length of the sidewall gum layers 52a, 52b. The first end 52a', 52b' is located axially inward of the corresponding lateral edge 24a', 24b' of the first belt 24 and radially between the first ply 30 (the radially outermost ply) and the respective lateral end portion 24a,24b of the first belt 24 (the radially innermost belt). Each of the sidewall gum layers 52a, 52b laterally overlaps the first belt 24 (the radially innermost belt) to define a laterally overlapping region 54a, 54b. In some embodiments, the laterally overlapping regions 54a, 54b extending for a length of at least 6 mm each. The second end 52a", 52b" is located at or within the respective bead region 20a, 20b. That is, a first sidewall gum layer 52a extends along an outer surface of the first ply 30 (the radially outermost ply) from a first end 52a' between the first ply 30 and the first lateral end portion 24a of the first belt 24 (the radially innermost belt) to a second end 52a" at a first bead region 20a wrapped by at least the second ply 32, and a second sidewall gum layer 52b extends along an outer surface of the first ply 30 from a first end 52b' between the first ply 30 and the second lateral end portion 24b of the first belt 24 to a second end 52b" at a second bead region 20b wrapped by at least the second ply 32.

Portions of each sidewall gum layer 52a, 52b are located between and contacting the first ply 30 and (a) the wedge 40a, 40b at or near the first end 52a', 52b', (b) the sidewall 16, 18, (c) the turned up ends 32a, 32b of the second ply 32 (the most radially inward ply), and (d) the bead filler apex 38a, 38b at or near the second end 52a", 52b".

As illustrated in FIG. 1, the second end 52a" of the sidewall gum layer 52a is disposed at a location designated by A0. The second end 52a" is located between and in contact with both the first ply 30 and the bead filler apex 38a on an axially inward side of the bead filler apex 52a". In other embodiments, the sidewall gum layer 52a may extend a greater or lesser distance within the bead region 20a. For example, the sidewall gum layer 52a may extend to location A1 such that the second end 52a" is located between and in contact with the first ply 30 and the bead core 36a. Similarly, the sidewall gum layer 52a may extend to location A2 such that the second end 52a" is located between and in contact with the first ply 30 and the turned up end 32a of the second ply 32. The sidewall gum layer 52b may be similarly arranged with respect to the corresponding bead region 20b.

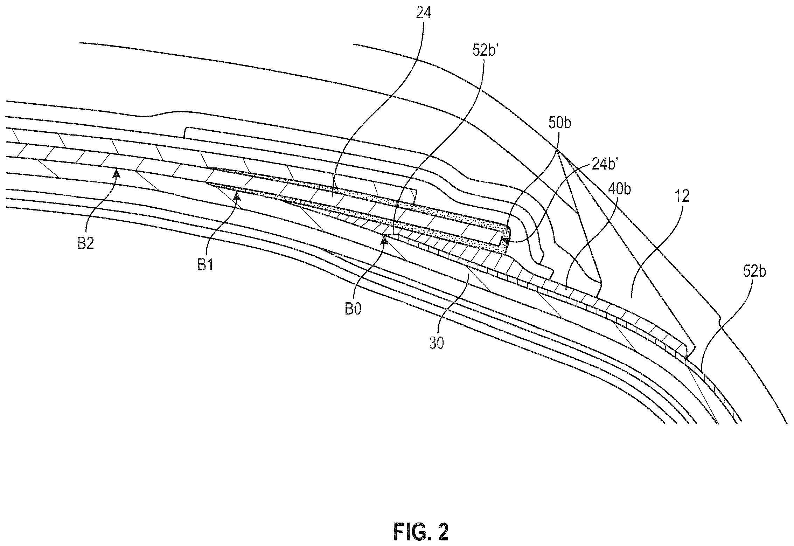

As illustrated in FIG. 2, the first end 52b' of the sidewall gum layer 52b is disposed at a location B0, which is radially between and in contact with the first ply 30 and the wedge 40b. In alternative embodiments to FIG. 2, the sidewall gum layers 52b may extend further along the first ply 30 to locations more axially inward from the lateral edge 24b' of the first belt 24. For example, the sidewall gum layer 52b may extend beyond the wedge 40b to a location B1, which is radially between and in contact with the first ply 30 and wraparound gum layer 50b. Similarly, the sidewall gum layer 52b may extend beyond the wraparound gum layer 50b to a location B2, which is radially between and in contact with the first ply 30 and the first belt 24. The sidewall gum layer 52a (FIG. 1) may be similarly arranged with respect to the first belt 24. In embodiments where the sidewall gum layers 52a, 52b extend axially inward from the wedges 40a, 40b, portions of each sidewall gum layer 52a, 52b can be located between and contacting the first ply 30 and (a) the wraparound gum layers 50a, 50b and/or the first belt 24 (the radially innermost belt), (b) the wedge 40a, 40b at or near the first end 52a', 52b', (c) the sidewall 16, 18, (d) the turned up ends 32a, 32b of the second ply 32 (the most radially inward ply), (e) the bead filler apex 38a, 38b at or near the second end 52a", 52b" and (f) the bead core 36a, 36b at or near the second end 52a", 52b".

In other alternative embodiments, the tire 10 may not include the pair of wedges 40a, 40b as illustrated in FIG. 3. In these embodiments, the first end 52b' of the sidewall gum layer 52b is disposed at a location C0, which is radially between and in contact with the first ply 30 and the wraparound gum layer 50b. The sidewall gum layer 52b may support the lateral end portion 24b and assist in maintaining a predetermined curvature of the first belt 24 in a manner similar to the wedge 40b (FIG. 2) described above. A length of the laterally overlapping region 54b may be adjusted to adjust the curvature of the first belt 24. For example, the sidewall gum layer 50b may extend axially to a location C1, which is radially between and in contact with the first ply 30 and the first belt 24. Since the sidewall gum layer 52b may function as a wedge 40b to maintain a predetermined curvature of the first belt 24, the wedge 40b to be removed from some designs. Removing the wedge 40b may lower costs and simplify the manufacturing process. The sidewall gum layer 52a (FIG. 1) may be similarly arranged with respect to the first belt 24. In embodiments where no wedge 24 is provided, portions of each sidewall gum layer 52a, 52b can be located between and contacting the first ply 30 and (a) the wraparound gum layers 50a, 50b and/or the first belt 24 (the radially innermost belt), (b) the sidewall 16, 18, (c) the turned up ends 32a, 32b of the second ply 32 (the most radially inward ply), (d) the bead filler apex 38a, 38b at or near the second end 52a", 52b", and (e) the bead core 36a, 36b at or near the second end 52a", 52b".

Referring to FIG. 4, in a comparative example, the tire 10 may not include the wraparound gum layers 50a, 50b (FIG. 2). In this case, the first end 52b' of the sidewall gum layer 52b is preferably disposed at a location D0, which is radially between and in contact with the first ply 30 and the first belt 24. Laterally overlapping region 54b is defined between the first end 52b' of the sidewall gum layer 52b and the lateral edge 24b' of the first belt 24. The sidewall gum layer 52a (FIG. 1) may be similarly arranged with respect to the first belt 24.

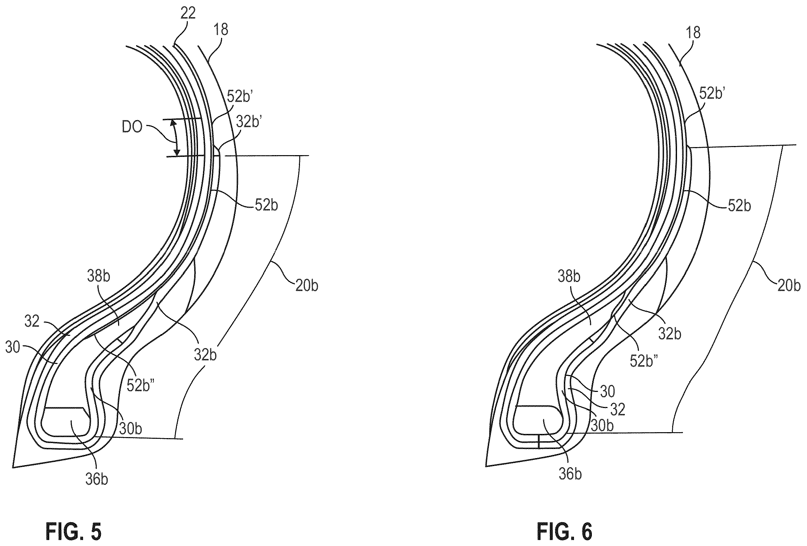

Referring to FIG. 5, the sidewall gum layer 52b and bead region 20b of FIG. 1 are illustrated in greater detail. The bead region 20b is wrapped by the carcass 22 and includes bead core 36b therein. As illustrated in FIG. 5, the bead region 20b also includes the optional bead filler apex 38b and a portion of the sidewall gum layer 52b that is wrapped by the carcass 22. The bead region 20b is bounded laterally by the first and second plies 30, 32 on a laterally inner side thereof and by the turned up ends 30b, 32b on a laterally outer side thereof. The bead region 20b is bounded radially by a radially innermost edge of the annular bead core 36b and a radially outermost end point 32b' of the turned up ends 30b, 32b.

The sidewall gum layer 52b extends along the ply 30 from the first belt 24 (FIG. 2) across the end point 32b' and into the bead region 20b. Radially outwardly of the end point 32b', the sidewall gum layer 52b is laterally interposed between the carcass 22 and the sidewall 18 such that a laterally inner side of the sidewall gum layer 52b is contacted by the first ply 30 and a laterally outer side of the sidewall gum layer 52b is contacted by the sidewall 18. The second end 52b" of the sidewall gum layer 52b is disposed within the bead region 20b. A laterally inner side of the second end 52b" is contacted by the first ply 30 and a laterally outer side of the second end 52b" is contacted by the bead filler apex 38b.

Referring to FIGS. 6 through 8, in alternate embodiments, different configurations of the bead region 20b and the sidewall gum layer 52b are contemplated. As illustrated in FIG. 6, the sidewall gum layer 52b extends along a laterally outer side of the bead filler apex 38b such that the second end 52b" is contacted by the bead filler apex 38b and the turned up end 32b of the second ply 32. As illustrated in FIG. 7, the bead region 20b does not include a bead filler apex, and the carcass 22 wraps the bead core 36b and a portion of the sidewall gum layer 52b. The sidewall gum layer 52b extends to the bead core 36b such that the second end 52b" is contacted by the bead core 36b and the turned up end 30b. As illustrated in FIG. 8, the sidewall gum layer 52b extends to a point within the bead region 20b that is radially outward of the bead filler apex 38b. The second end 52b" is contacted by the first ply 30 on a laterally inner side thereof and by the turned up end 32b on a laterally outer side thereof. The second end 52b" is disposed radially outward of a radially innermost portion 18b of the sidewall 18. In any of the configurations illustrated in FIGS. 6 through 8, the sidewall gum layer 52 will absorb and dissipate energy and heat generated when the sidewall 18 flexes as described above.

The length of each sidewall gum layer 52a, 52b may be 50 mm to 90 mm (or 55 mm to 75 mm).

The gum layers (e.g., the wraparound gum layers 50a, 50b and the sidewall gum layers 52a, 52b) used in the construction of the tires described herein can be formed of a rubber and/or elastomer. Preferably, the rubber and/or the elastomer of the gum layer has a Shore A hardness between 80 and 95, tested according to ASTM S2240-15(2021) and preferably with a cure of 18 minutes at 150°C. Further, the rubber and/or the elastomer of the gum layer preferably has a RPA G' 1 percent of 4 MPa or greater. As used herein, the term "RPA" means rubber processing analyzer analytical equipment as produced by the Monsanto Company, and referred to as "RPA 2000." The term "RPA G' 1 percent" refers to the dynamic storage modulus "G‴ at a one (1) percent strain (elongation) as determined by the RPA 2000 analytical equipment measured at 100°C.

The gum layers preferably have a thickness of 0.2 mm to 2 mm (or 0.2 mm to 1 mm, or 0.5 mm to 1.5 mm, or 1 mm to 2 mm). Each gum layer preferably may have the same or a different thickness from each other.

The rubber that at least partially forms parts of the tire like the innerliner, carcasses (including the carcass plies), belt structures, and tread portions may comprise a rubber. Specific examples of suitable rubbers include neoprene (polychloroprene), polybutadiene (including cis-1,4-polybutadiene), polyisoprene (including cis-1,4-polyisoprene) (natural or synthetic), butyl rubber, halobutyl rubber (including chlorobutyl rubber or bromobutyl rubber), styrene/isoprene/butadiene rubber, copolymers of 1,3-butadiene or isoprene with monomers such as styrene, acrylonitrile and methyl methacrylate, ethylene/propylene terpolymers (also known as ethylene/propylene/diene monomer (EPDM) terpolymers (e.g., ethylene/propylene/dicyclopentadiene terpolymers)), alkoxy-silyl end functionalized solution polymerized polymers, styrene-butadiene rubber, polybutadiene rubber, isoprene butadiene rubber, styrene isoprene butadiene rubber, the like, and any combination thereof. The foregoing rubbers may also include conventional rubber compounding ingredients including processing oil, accelerators, conventional sulfur curing agents, pigments, carbon black, zinc oxide, stearic acid, tackifying resin, plasticizer, the like, and any combination thereof.

The production of the tires of the present invention may include assembling the tire components followed by curing according to production methods conventionally known in the art, which may be dependent on the type of tire. For example, US Patent No. 10,960,627 describes methods for producing tires. Generally, gum layers typically come in a roll (e.g., 1 cm to 20 cm wide). One skilled in the art, with the benefit of this disclosure, will recognize how to apply the gum layers to achieve the various embodiments of tires described herein.

To facilitate a better understanding of the embodiments of the present invention, the following examples of preferred or representative embodiments are given.

### EXAMPLES

Gum layers of 0.5 mm to 0.6 mm thickness were used in the construction of different vehicle tire configurations, each corresponding to the construction of FIG. 1. Under high-load testing, the durability of the tire was improved with only a minor increase ( 1% to 2%) in rolling resistance as compared to said configurations without the gum layers.

## Claims

1. A tire comprising:
a bead portion (20a, 20b) comprising a bead core (36a, 36b) embedded therein;
a carcass (22) anchored around the bead core (36a, 36b), the carcass (22) comprising a carcass ply portion (30) and a turnup portion (30a, 30b);
an apex (38a, 38b) between the carcass ply portion (30) and the turnup portion (30a, 30b);
a belt structure (14) arranged between the carcass (22) and a tread (12);
a sidewall gum layer (52a, 52b) that extends from a first end point (52a", 52b") located at the apex (38a, 38b) or radially between the radially innermost point of the apex (38a, 38b) and the radially outermost point of the apex (38a, 38b) radially upwards to a second end point (52a', 52b') and along the carcass ply portion (30); and
a belt gum layer that extends from a first end point located between the belt structure (14) and the carcass ply portion (30) along the carcass ply portion (30) axially outwards to a second end point;
wherein a distance or spacing between the second end point of the belt gum layer and the second end point (52a', 52b') of the sidewall gum layer (52a, 52b) is 15 mm or greater;
**characterized in that** the tire (10) further comprises a wraparound gum layer (50a, 50b) that wraps around an axially outer end portion (24a, 24b) of the belt structure (14) or of at least one belt (24, 26) of the belt structure (14).

2. The tire of claim 1 wherein the belt structure (14) is or comprises a zigzag belt structure.

3. The tire of at least one of the previous claims 1 or 2, wherein the belt gum layer contacts the wraparound gum layer.

4. The tire of at least one of the previous claims, further comprising a sidewall portion (16, 18) extending radially outward from the bead portion (20a, 20b) in a radial direction and towards the sidewall gum layer (52a, 52b) and the wraparound gum (50a, 50b) layer, wherein a portion of the sidewall portion (16, 18) is located between a portion of the belt gum layer (52a, 52b) and a portion of the wraparound gum layer (50a, 50b).

5. The tire of at least one of the previous claims, wherein the sidewall gum layer (52a, 52b) has a thickness in a range of from of 0.2 mm to 2 mm or of from 0.4 mm to 1.5 mm; and/or wherein the wraparound gum layer (50a, 50b) has a thickness in a range of from of 0.2 mm to 2 mm or of from 0.4 mm to 1.5 mm; and/or wherein the belt gum layer has a thickness in a range of from of 0.2 mm to 2 mm or of from 0.4 mm to 1.5 mm

6. The tire of at least one of the previous claims, wherein the sidewall gum layer (52a, 52b) and/or the wraparound gum layer (50a, 50b) and/or the belt gum layer comprises a rubber having a Shore A hardness in a range of from 80 to 95.

7. The tire of at least one of the previous claims, wherein the sidewall gum layer (52a, 52b) and/or the wraparound gum layer (50a, 50b) and/or the belt gum layer comprises a rubber selected from the group consisting of: neoprene, polybutadiene, polyisoprene, butyl rubber, halobutyl rubber, styrene/isoprene/butadiene rubber, copolymers of 1,3-butadiene or isoprene with monomers such as styrene, acrylonitrile and methyl methacrylate, ethylene/propylene terpolymers, alkoxy-silyl end functionalized solution polymerized polymers, styrene-butadiene rubber, polybutadiene rubber, isoprene butadiene rubber, styrene isoprene butadiene rubber, and any combination thereof.

8. The tire of at least one of the previous claims, where the distance or spacing is in a range of from 15 mm to 45 mm or from 20 to 30 mm.

9. The tire of at least one of the previous claims, wherein at least two of: the sidewall gum layer (52a, 52b), the wraparound gum layer (50a, 50b), and the belt gum layer have a different composition; and/or wherein at least two of: the sidewall gum layer (52a, 52b), the wraparound gum layer (50a, 50b), and the belt gum layer have a different thickness.

10. The tire of at least one of the previous claims, wherein the tire (10) is a pneumatic race tire, a pneumatic passenger tire, a pneumatic heavy load capacity passenger tire, a pneumatic aircraft tire, a pneumatic agricultural tire, a pneumatic earthmover tire, a pneumatic off-the-road tire, or a pneumatic truck tire.

11. The tire of claim of at least one of the previous claims, further comprising a pair of wedges (40a, 40b), wherein an axially inner end of each wedge (40a, 40b) is disposed between the belt structure (14) and the carcass ply (30); and/or wherein an axially outer end of each wedge (41a, 40b) is disposed radially between and in contact with one of the lateral end portions of the tread (12) or of a tread cap and a radially outermost carcass ply (30).

12. The tire of claim of at least one of the previous claims, wherein each of the bead regions (20a, 20b) includes a bead filler apex (38a, 38b) disposed radially outward of the annular bead core (36a, 36b), and wherein the second end point (52a", 52b") of each sidewall gum layer (52a, 52b) is in contact with a corresponding bead filler apex (38a, 38b).

## Patentansprüche

1. Reifen, der das Folgende umfasst:
einen in Form eines Wulstes ausgebildeten Abschnitt (20a, 20b), wobei in diesem ein Wulstkern (36a, 36b) eingebettet ist;
eine Karkasse (22), die um das Wulstkern (36a, 36b) verankert ist; wobei die Karkasse (22) einen in Form einer Karkassenlage ausgebildeten Abschnitt (30) und einen in Form eines Lagenumschlags ausgebildeten Abschnitt (30a, 30b) umfasst;
ein Kernprofil (38a, 38b) zwischen dem in Form einer Karkassenlage ausgebildete Abschnitt (30) und dem in Form eines Lagenumschlags ausgebildeten Abschnitt (30a, 30b);
eine Gürtelstruktur (14), die zwischen der Karkasse (22) und einer Lauffläche (12) angebracht ist;
eine in Form einer Seitenwand ausgebildete Gummischicht (52a, 52b), die sich von einem ersten Endpunkt (52a'', 52b'') erstreckt, der an der Stelle wo das Kernprofil (38a, 38b) liegt, oder in der radialen Richtung zwischen dem in der radialen Richtung innersten Punkt des Kernprofils (38a, 38b) und dem in der radialen Richtung äußersten Punkt des Kernprofils (38a, 38b), nach oben bis zu einem zweiten Endpunkt (52a', 52b') und entlang des in Form einer Karkassenlage ausgebildeten Abschnitts (30); und
eine in Form eines Gürtels ausgebildete Gummischicht, die sich von einem ersten Endpunkt, der zwischen der Gürtelstruktur (14) und dem in Form einer Karkassenlage ausgebildeten Abschnitt (30) liegt, in der axialen Richtung nach außen bis zu einem zweiten Endpunkt erstreckt;
wobei ein Abstand oder eine Strecke zwischen dem zweiten Endpunkt der in Form eines Gürtels ausgebildeten Gummischicht und dem zweiten Endpunkt (52a', 52b') der in Form einer Seitenwand ausgebildeten Gummischicht (52a, 52b) 15 mm oder mehr beträgt;
**dadurch gekennzeichnet, dass** der Reifen (10) ferner eine in Form einer Umhüllung ausgebildete Gummischicht (50a, 50b) umfasst, die einen in axialer Richtung äußeren Endabschnitt (24a, 24b) der Gürtelstruktur (14) oder mindestens einen Gürtel (24, 26), der Teil der Gürtelstruktur (14) ist, umhüllt.

2. Reifen nach Anspruch 1, wobei die Gürtelstruktur (14) eine Gürtelstruktur in Form eines Zickzacks ist oder eine solche umfasst.

3. Reifen nach mindestens einem der vorhergehenden Ansprüche 1 oder 2, wobei die in Form eines Gürtels ausgebildete Gummischicht mit der in Form einer Umhüllung ausgebildeten Gummischicht in Kontakt kommt.

4. Reifen nach mindestens einem der vorhergehenden Ansprüche, der ferner einen in Form einer Seitenwand ausgebildeten Abschnitt (16, 18) umfasst, der sich in der radialen Richtung außerhalb des in Form eines Wulstes ausgebildeten Abschnitts (20a, 20b) in einer radialen Richtung sowie in der Richtung der in Form einer Seitenwand ausgebildeten Gummischicht (52a, 52b) und der in Form einer Umhüllung ausgebildeten Gummischicht (50a, 50b) erstreckt; wobei ein Teil des in Form einer Seitenwand ausgebildeten Abschnitts (16, 18) zwischen einer in Form einer Seitenwand ausgebildeten Gummischicht (52a, 52b) und einer in Form einer Umhüllung ausgebildeten Gummischicht (50a, 50b) liegt.

5. Reifen nach mindestens einem der vorhergehenden Ansprüche, wobei die in Form einer Seitenwand ausgebildete Gummischicht (52a, 52b) eine Dicke aufweist, die in dem Bereich von 0,2 mm bis 2 mm oder von 0,4 mm bis 1,5 mm liegt ; und/oder wobei die eine in Form einer Umhüllung ausgebildete Gummischicht (50a, 50b) eine Dicke aufweist, die in einem Bereich von 0,2 mm bis 2 mm oder von 0,4 mm bis 1,5 mm liegt; und/oder wobei die in Form eines Gürtels ausgebildete Gummischicht eine Dicke aufweist, die in einem Bereich von 0,2 mm bis 2 mm oder von 0,4 mm bis 1,5 mm liegt.

6. Reifen nach mindestens einem der vorhergehenden Ansprüche, wobei die in Form einer Seitenwand ausgebildete Gummischicht (52a, 52b); und/oder die eine in Form einer Umhüllung ausgebildete Gummischicht (50a, 50b) einen Kautschuk umfassen, der eine Shore-A-Härte aufweist, die in dem Bereich von 80 bis 95 liegt.

7. Reifen nach mindestens einem der vorhergehenden Ansprüche, wobei die in Form einer Seitenwand ausgebildete Gummischicht (52a, 52b); und/oder die eine in Form einer Umhüllung ausgebildete Gummischicht (50a, 50b); und/oder die in Form eines Gürtels ausgebildete Gummischicht, einen Kautschuk umfassen, der ausgewählt ist aus der Gruppe, die aus Folgendem besteht: Neopren, Polybutadien, Polyisopren, Butylkautschuk, Halogenbutylkautschuk, Styrol/Isopren/Butadien-Kautschuk, Copolymere von 1,3-Butadien oder Isopren mit Monomeren wie Styrol, Acrylnitril und Methylmethacrylat, Ethylen/Propylen-Terpolymere, in Lösung polymerisierte Polymere, die mit einem Endpunkt funktionalisiert sind, der eine Alkoxysilylgruppe umfasst, Styrol-Butadien-Kautschuk, Polybutadien-Kautschuk, Isopren-Butadien-Kautschuk, Styrol-Isopren-Butadien-Kautschuk sowie eine beliebige Kombination der oben genannten Kautschuke.

8. Reifen nach mindestens einem der vorhergehenden Ansprüche, wobei der Abstand oder die Strecke in einem Bereich von 15 mm bis 45 mm oder von 20 mm bis 30 mm liegt.

9. Reifen nach mindestens einem der vorhergehenden Ansprüche, wobei mindestens zwei Schichten, die unter die folgenden Schichten, nämlich die in Form einer Seitenwand ausgebildete Gummischicht (52a, 52b); und/oder die eine in Form einer Umhüllung ausgebildete Gummischicht (50a, 50b); und/oder die in Form eines Gürtels ausgebildete Gummischicht ausgewählt sind, eine verschiedene Zusammensetzung aufweisen; und/oder wobei mindestens zwei Schichten, die unter die folgenden Schichten, nämlich die in Form einer Seitenwand ausgebildete Gummischicht (52a, 52b); und/oder die eine in Form einer Umhüllung ausgebildete Gummischicht (50a, 50b); und/oder die in Form eines Gürtels ausgebildete Gummischicht ausgewählt sind, eine verschiedene Dicke aufweisen.

10. Reifen nach mindestens einem der vorhergehenden Ansprüche, wobei der Reifen (10) einen Reifen zum Gebrauch für ein Rennfahrzeug, einen Reifen zum Gebrauch für ein Personenfahrzeug, einen Reifen zum Gebrauch für ein schwerlastfähiges Personenfahrzeug, einen Reifen zum Gebrauch für ein Flugzeug, einen Reifen zum Gebrauch für landwirtschaftliche Geräte, einen Reifen zum Gebrauch für Baumaschinen, einen Reifen zum Gebrauch für Off-Road-Dienste oder einen Reifen zum Gebrauch für einen Lastkraftwagen darstellt.

11. Reifen nach mindestens einem der vorhergehenden Ansprüche, der ferner ein Paar von Befestigungskeilen (40a, 40b) umfasst; wobei ein in der axialen Richtung inneres Ende jedes Befestigungskeils (40a, 40b) zwischen der Gürtelstruktur (14) und der Karkassenlage (30) angebracht ist; und/oder wobei ein in der axialen Richtung äußeres Ende jedes Befestigungskeils (40a, 40b) in der radialen Richtung zwischen einem der seitlichen Endabschnitte der Lauffläche (12) oder eines Laufflächenstreifens und einer in der radialen Richtung äußersten Karkassenlage (30) angebracht ist, und mit den oben genannten Endabschnitten in Kontakt steht.

12. Reifen nach mindestens einem der vorhergehenden Ansprüche, wobei jeder der in Form von Wülsten ausgeführten Abschnitte (20a, 20b) ein Kernprofil (38a, 38b) enthält, das in der radialen Richtung außerhalb des ringförmigen Wulstkerns (36a, 36b) angeordnet ist; und wobei der zweite Endpunkt (52a'', 52b'') jeder in Form einer Seitenwand ausgebildeten Gummischicht (52a, 52b) mit einem entsprechenden Kernprofil (38a, 38b) in Kontakt gebracht wird.

## Revendications

1. Bandage qui comprend :
une portion réalisée en forme de talon (20a, 20b) dans laquelle est encastré un fil de tringle (36a, 36b) ;
une carcasse (22) qui est ancrée autour du fil de tringle (36a, 36b) ; dans lequel la carcasse (22) comprend une portion (30) réalisée en forme de nappe de carcasse et une portion réalisée en forme de retournement de nappe (30a, 30b);
un bourrage sur tringle (38a, 38b) entre la portion (30) réalisée en forme de nappe de carcasse et la portion réalisée en forme de retournement de nappe (30a, 30b);
une structure de ceintures (14) qui est disposée entre la carcasse (22) et une bande de roulement (12) ;
une couche de gomme qui forme un flanc (52a, 52b) qui s'étend à partir d'un premier point terminal (52a'', 52b'') qui est situé à l'endroit occupé par le bourrage sur tringle (38a, 38b) ou, dans la direction radiale, entre le point du bourrage sur tringle (38a, 38b) le plus interne dans la direction radiale et le point du bourrage sur tringle (38a, 38b) le plus externe dans la direction radiale, vers le haut jusqu'à un deuxième point terminal (52a', 52b') et le long de la portion (30) réalisée en forme de nappe de carcasse ; et
une couche de gomme qui forme une ceinture, qui s'étend dans la direction axiale, vers l'extérieur, à partir d'un premier point terminal qui est situé entre la structure de ceintures (14) et la portion (30) réalisée en forme de nappe de carcasse, jusqu'à un deuxième point terminal ;
dans lequel une distance ou un écartement entre le deuxième point terminal de la couche de gomme qui forme une ceinture et le deuxième point terminal (52a', 52b') de la couche de gomme qui forme un flanc (52a, 52b) s'élève à 15 mm ou plus ;
**caractérisé en ce que** le bandage (10) comprend en outre une couche de gomme (50a, 50b) qui forme un enveloppement, qui vient envelopper une portion terminale (24a, 24b), externe dans la direction axiale, de la structure de ceintures (14) ou d'au moins une ceinture (24, 26) qui fait partie de la structure de ceintures (14).

2. Bandage selon la revendication 1, dans lequel la structure de ceintures (14) est une structure de ceintures réalisée en forme de zigzag ou comprend une telle structure.

3. Bandage selon au moins une des revendication précédentes 1 ou 2, dans lequel la couche de gomme qui forme une ceinture entre en contact avec la couche de gomme qui forme un enveloppement.

4. Bandage selon au moins une des revendication précédentes, qui comprend en outre une portion réalisée en forme de flanc (16, 18) qui s'étend dans la direction radiale vers l'extérieur par rapport à la portion réalisée en forme de talon (20a, 20b) dans une direction radiale et dans la direction de la couche de gomme qui forme un flanc (52a, 52b) et de la couche de gomme (50a, 50b) qui forme un enveloppement ; dans lequel une partie de la portion réalisée en forme de flanc (16, 18) est située entre une partie de la couche de gomme qui forme un flanc (52a, 52b) et une partie de la couche de gomme (50a, 50b) qui forme un enveloppement.

5. Bandage selon au moins une des revendication précédentes, dans lequel la couche de gomme qui forme un flanc (52a, 52b) possède une épaisseur qui se situe dans une plage allant de 0,2 mm à 2 mm ou de 0,4 mm à 1,5 mm ; et/ou dans lequel la couche de gomme (50a, 50b) qui forme un enveloppement possède une épaisseur qui se situe dans une plage allant de 0,2 mm à 2 mm ou de 0,4 mm à 1,5 mm ; et/ou dans lequel la couche de gomme qui forme une ceinture possède une épaisseur qui se situe dans une plage allant de 0,2 mm à 2 mm ou de 0,4 mm à 1,5 mm.

6. Bandage selon au moins une des revendication précédentes, dans lequel la couche de gomme qui forme un flanc (52a, 52b) ; et/ou la couche de gomme (50a, 50b) qui forme un enveloppement comprennent un caoutchouc qui possède une dureté Shore A qui se situe dans une plage allant de 80 à 95.

7. Bandage selon au moins une des revendication précédentes, dans lequel la couche de gomme qui forme un flanc (52a, 52b) ; et/ou la couche de gomme (50a, 50b) qui forme un enveloppement comprennent un caoutchouc qui est choisi parmi le groupe constitué par: du Néoprène, du polybutadiène, un polyisoprène, du caoutchouc butyle, du caoutchouc halogénobutyle, un caoutchouc de styrène/isoprène/butadiène, des copolymères de 1,3-butadiène ou d'isoprène avec des monomères tels que le styrène, l'acrylonitrile et le méthacrylate de méthyle, des terpolymères d'éthylène/propylène, des polymères qui ont été polymérisés en solution, fonctionnalisés avec une terminaison comprenant un groupe alcoxy-silyle, du caoutchouc de styrène-butadiène, du caoutchouc de polybutadiène, un caoutchouc d'isoprène-butadiène, un caoutchouc de styrène isoprène butadiène, ainsi que l'une quelconque des combinaisons des caoutchoucs précités.

8. Bandage selon au moins une des revendication précédentes, dans lequel la distance ou l'écartement se situe dans une plage allant de 15 mm à 45 mm ou de 20 mm à 30 mm.

9. Bandage selon au moins une des revendication précédentes, dans lequel au moins deux couches qui sont choisies parmi la couche de gomme qui forme un flanc (52a, 52b), la couche de gomme (50a, 50b) qui forme un enveloppement et la couche de gomme qui forme une ceinture possèdent une composition différente ; et/ou dans lequel au moins deux couches qui sont choisies parmi la couche de gomme qui forme un flanc (52a, 52b), la couche de gomme (50a, 50b) qui forme un enveloppement et la couche de gomme qui forme une ceinture possèdent une épaisseur différente.

10. Bandage selon au moins une des revendication précédentes, dans lequel le bandage (10) représente un bandage pneumatique destiné à un véhicule de course, un bandage pneumatique destiné à un véhicule de tourisme, un bandage pneumatique destiné à un véhicule de tourisme, capable de supporter une lourde charge, un bandage pneumatique destiné à un aéroplane, un bandage pneumatique destiné à du matériel agricole, un bandage pneumatique destiné à un équipement de génie civil, un bandage pneumatique destiné à des services hors route ou un bandage pneumatique destiné à un camion.

11. Bandage selon au moins une des revendication précédentes, qui comprend en outre une paire de cales de fixation (40a, 40b) ; dans lequel une extrémité de chaque cale de fixation (40a, 40b), interne dans la direction axiale est disposée entre la structure de ceintures (14) et la nappe de carcasse (30) ; et/ou dans lequel une extrémité de chaque cale de fixation (40a, 40b), externe dans la direction axiale est disposée, dans la direction radiale, entre une des portions terminales latérales de la bande de roulement (12) ou d'une chape de bande de roulement et une nappe de carcasse (30) située le plus à l'extérieure dans la direction radiale, et entre en contact avec lesdites portions.

12. Bandage selon au moins une des revendication précédentes, dans lequel chacune des portions réalisées en forme de talons (20a, 20b) englobe un bourrage sur tringle (38a, 38b) qui est disposé, dans la direction radiale, à l'extérieur du fil de tringle de forme annulaire (36a, 36b) ; et dans lequel le deuxième point terminal (52a'', 52b'') de chaque couche de gomme qui forme un flanc (52a, 52b) est mis en contact avec un bourrage sur tringle correspondant (38a, 38b).
